Europäisches Patentamt

European Patent Office

Office européen des brevets

(19)

(11) EP 1 732 086 A1

(12) EUROPEAN PATENT APPLICATION
published in accordance with Art. 158(3) EPC

(43) Date of publication:
13.12.2006 Bulletin 2006/50

(51) Int Cl.:
G21K 1/06 (2006.01)   G21K 5/02 (2006.01)
B23K 26/00 (2006.01)   H05G 2/00 (2006.01)

(21) Application number: 05709938.4

(22) Date of filing: 09.02.2005

(86) International application number:
PCT/JP2005/001886

(87) International publication number:
WO 2005/078738 (25.08.2005 Gazette 2005/34)

(84) Designated Contracting States:
AT BE BG CH CY CZ DE DK EE ES FI FR GB GR
HU IE IS IT LI LT LU MC NL PL PT RO SE SI SK TR

(30) Priority: 12.02.2004 JP 2004034343

(71) Applicant: Japan Science and Technology Agency
Kawaguchi-shi,
Saitama 332-0012 (JP)

(72) Inventors:
• MAKIMURA, Tetsuya
  Tsukuba-shi, Ibaraki 3050044 (JP)
• MURAKAMI, Kouichi
  Tsuchiura-shi, Ibaraki 3000836 (JP)

(74) Representative: Krauss, Jan
Forrester & Boehmert
Anwaltssozietät
Pettenkoferstrasse 20-22
D-80336 München (DE)

(54) SOFT X-RAY PROCESSING DEVICE AND SOFT X-RAY PROCESSING METHOD

(57)    Use an ellipsoidal mirror that matches the wavelength of soft X-ray and thereby improves light-focusing efficiency, to increase the energy density of soft X-ray and process and/or refine works made of inorganic materials, etc., at an accuracy of several nm by using only soft X-ray, without irradiation with both patterned soft X-ray (patterned beam) and processing laser light. Focus soft X-ray 14 emitted from a light source part 7 to high energy density using an ellipsoidal mirror 15 and irradiate a work 19 with the focused light in a specified pattern in order to process only the area of the work 19 that has been irradiated with soft X-ray 14 in the specified pattern.

Fig. 1

EP 1 732 086 A1

## Description

### Technical Field

The present invention relates to an optical processing apparatus and optical processing method offering high general utility, wherein a work can be processed finely (with an accuracy of up to several nm) in a single step without requiring multiple steps. Works that can be processed using the present invention include inorganic materials, organic materials, transparent materials, opaque materials, and Si materials such as Si, $SiO_2$ and silicone.

### Background Art

Inorganic materials offer great utility in various fields. For example, they can be used for photonic crystals, optical waveguides and other optical elements, as well as in ultra-micro chemical analyses and reaction processes required in medical and biotechnological applications. Accordingly, there are needs for technologies with which to process or refine inorganic materials accurately and at low cost.

Laser ablation, in which a substance is irradiated with laser light to remove the irradiated surface and thereby process the substance, is a technology already in practical use in metal processing, which uses carbonic gas laser. In optical processing applications represented by optical lithography, where fine processing is currently most advanced, processing accuracy is still limited by the wavelength of laser light used for processing, at a level of approx. 100 nm at best.

Also, transparent inorganic materials cannot be processed easily using conventional optical processing technologies. This is because transparent inorganic materials have no color and therefore do not absorb a laser light.

The following is a list of conventional optical processing technologies used for processing inorganic materials, etc.

(1) A technology has been reported wherein a work is soaked in a light-absorbent solution and then processed using laser. However, processing accuracy achieved by this technique does not even reach the wavelength of laser light.

(2) It has been reported that allowing the processing surface of a work to contact laser plasma generated by laser ablation and then irradiating this plasma-contacted surface with processing laser light cause a plasma, which has absorbed laser energy, to shave material off the work. However, this technology does not provide a level of processing accuracy comparable to the wavelength of laser light.

(3) When silicon dioxide is irradiated with $F_2$ laser light, light is absorbed due to the amorphous nature of silicon dioxide. It has been reported that materials can be processed by means of irradiation with KrF (krypton fluoride) laser light simultaneously at high intensity in this condition. However, a key prerequisite of this technology is to create a condition in which the first laser light is absorbed. For this reason, this method offers low general utility.

(4) When a work is irradiated with femtosecond laser light while causing multiple photons to be absorbed by the work at the same time, even a transparent material absorbs a laser light due to the effect of multi-photon absorption. Although this effect can be utilized to shave, refine or otherwise process materials, processing accuracy is still limited to the wavelength of laser light.

(5) It has been reported that causing interference of two femtosecond laser beams on the surface of a work allows the material to be processed at interference patterns of several nm. However, patterns that can be used with this processing technology are limited.

Furthermore, a technology is known wherein the surface of insulation film made of polyimide or other material and adjusted to a thickness of 5 to 200 $\mu$m is punched to create bump holes of approx. 25 $\mu$m in diameter, and then "soot," "residue" and other forms of carbon deposited inside and around the created bump holes are removed by plasma processing and/or X-ray (soft X-ray) irradiation (refer to Patent Literature 1).

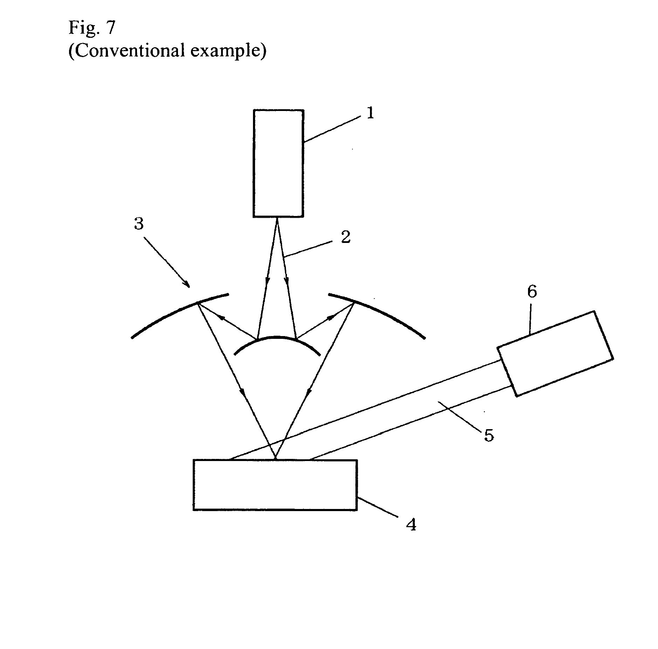

The inventors of the present invention have earlier proposed a processing technology offering high general utility that can be used to process quartz glass and other transparent inorganic materials at an accuracy of nano-scale (up to 10 nm). Based on the processing apparatus and processing method proposed earlier, soft X-ray 2 emitted from a soft X-ray source 1 is focused onto a transparent inorganic material 4 in a specified pattern using an optics system 3 comprising a combination of convex mirror and concave mirror, as shown in Fig. 7, to cause induced absorption only in the irradiated area of the transparent inorganic material 4, after which this area is irradiated with processing laser light 5 to cause only the patterned area of the transparent inorganic material 4 to absorb the visible or ultraviolet processing laser light 5 of high energy density (Nd:YAG laser beam (266 nm)), thereby processing the transparent inorganic material 4 (refer to Patent Literatures 2 and 3).

Patent Literature 1: Japanese Patent Laid-open No. 2002-252258
Patent Literature 2: Japanese Patent Laid-open No. 2003-167354
Patent Literature 3: U.S. Patent No. 6,818,908

## Summary of the Invention

### Problems to Be Solved by the Invention

The technology described in Patent Literature 1 above is, using laser processing, to punch holes of approx. 25 $\mu$m in diameter in insulation film made of polyimide or other material and adjusted to a thickness of 5 to 200 $\mu$m, and then remove resulting residues, etc., using plasma processing and/or X-ray (soft X-ray) irradiation. In other words, it does not process the work at nano-accuracy.

The technologies described in Patent Literatures 2 and 3 above offer high general utility and can be used to process quartz glass and other transparent inorganic materials at an accuracy of nano-scale. However, they utilize ultraviolet absorption based on absorber material generated by patterned soft X-ray. Therefore, both patterned soft X-ray (patterned beam) and processing laser light must be irradiated, and this makes the apparatus and processing operation complex. Also, only those materials that generate light-absorbent states can be processed, which leaves room for further improvement.

The object of the present invention is to solve the aforementioned problems presented by conventional technologies and enable nano-order processing of works using only ultraviolet light and/or soft X-ray, without irradiation with a processing laser light. To achieve the object, the inventors endeavored to select a light source that would generate ultraviolet light and/or soft X-ray most suitable for processing applications, and to achieve a structure comprising ultraviolet light and/or soft X-ray and an ellipsoidal mirror based on optimal conditions that would match the wavelength of ultraviolet light and/or soft X-ray and thereby improve light-focusing efficiency and also enhance the energy density of ultraviolet light and/or soft X-ray.

### Means for Solving the Problems

To solve the aforementioned problems, the present invention provides an optical processing apparatus comprising a light source part and a light-focusing irradiation means; wherein the light source part generates ultraviolet light and/or soft X-ray that allows a work to effectively absorb light, by irradiation of a target with laser light focused using a light-focusing optics system, and the light-focusing irradiation means comprises an optics system to focus the ultraviolet light and/or soft X-ray to high energy density in accordance with the wavelength of ultraviolet light and/or soft X-ray, and irradiates the work with the focused ultraviolet light and/or soft X-ray of high energy density in a specified pattern in order to process and/or refine the work.

To solve the aforementioned problems, the present invention provides an optical processing apparatus comprising a light source part and a patterning and irradiating means; wherein the light source part generates ultraviolet light and/or soft X-ray that allows a work to effectively absorb light, by irradiation of a target with laser light focused using a light-focusing optics system, and the patterning and irradiating means comprises an optics system to focus the ultraviolet light and/or soft X-ray to high energy density in accordance with the wavelength of ultraviolet light and/or soft X-ray, and irradiates the work with the focused ultraviolet light and/or soft X-ray of high energy density as a specified patterned beam adjusted to a desired shape in order to process and/or refine the work.

As for the aforementioned optical processing apparatus, it is desirable that the optics system to focus ultraviolet light and/or soft X-ray to high energy density in accordance with the wavelength of ultraviolet light and/or soft X-ray be an ellipsoidal mirror; and that, in the light source part, the generation source of ultraviolet light and/or soft X-ray be positioned at one of the two focal points of the ellipsoidal mirror, while the product of the reflectance on the ellipsoidal mirror surface with respect to the wavelength of ultraviolet light and/or soft X-ray reflected by the ellipsoidal mirror and focused on the other focal point, and the solid angle of the ellipsoidal mirror at the light source part, be set sufficiently large.

It is also possible that the optics system to focus ultraviolet light and/or soft X-ray to high energy density in accordance with the wavelength of ultraviolet light and/or soft X-ray is an ellipsoidal mirror; and that, in the light source part, the generation source of ultraviolet light and/or soft X-ray is positioned at one of the two focal points of the ellipsoidal mirror, while the product of reflectance R on the ellipsoidal mirror surface with respect to the wavelength of ultraviolet light and/or soft X-ray reflected by the ellipsoidal mirror and focused on the other focal point, and angle $\phi$ specified by Equation 1 below at the light source part viewing therefrom both ends of the ellipsoidal mirror in the long axis direction is set sufficiently large. Here, the symbols used in Equation 1 below are defined as follows:

$\theta$: Grazing angle of light emitted from the aforementioned one of the focal points as it enters the ellipsoidal mirror

w/f: Ratio of the distance between focal points, or 2f, and the length of the ellipsoidal mirror in the rotating axis direction, or 2w

$\alpha$: Angle formed by the "rotating axis of the ellipsoidal mirror" and the "straight line passing the one of the focal points of the ellipsoidal mirror and the end point of the ellipsoidal mirror in the rotating axis direction located closer to that focal point"

$\beta$: Angle formed by the "rotating axis of the ellipsoidal mirror" and the "straight line passing the one of the focal points of the ellipsoidal mirror and the end point of the ellipsoidal mirror in the rotating axis direction located farther from that focal point"

[Equation 1]

$$\phi = \alpha - \beta$$
$$= \tan^{-1} \frac{\tan\theta \sqrt{1 - \left(\frac{w}{f}\right)^2 \cos^2\theta}}{1 - \frac{w}{f}} - \tan^{-1} \frac{\tan\theta \sqrt{1 - \left(\frac{w}{f}\right)^2 \cos^2\theta}}{1 + \frac{w}{f}}$$

The optics system to focus ultraviolet light and/or soft X-ray to high energy density in accordance with the wavelength of ultraviolet light and/or soft X-ray may be constituted by one mirror or a combination of two or more mirrors selected from a group comprising rotary paraboloidal mirror, toroidal mirror, rotary ellipsoidal mirror and rotary hyperbolic mirror.

The optics system to focus ultraviolet light and/or soft X-ray to high energy density in accordance with the wavelength of ultraviolet light and/or soft X-ray may be constituted as a Wolter mirror comprising a combination of rotary hyperboloidal mirror and rotary ellipsoidal mirror.

To solve the aforementioned problems, the present invention provides an optical processing method characterized by: focusing and irradiating a laser beam at a light source part onto a target through a light-focusing optics system, and generating ultraviolet light and/or soft X-ray that allows a work to effectively absorb light; and focusing the ultraviolet light and/or soft X-ray to high energy density in accordance with the wavelength of ultraviolet light and/or soft X-ray using an ellipsoidal mirror, irradiating the work with the focused ultraviolet light and/or soft X-ray of high energy density in a specified pattern, and processing and/or refining the work.

**Effect of the Invention**

According to the present invention having the aforementioned structure, energy density of soft X-ray can be increased and the work can be processed at nano-scale accuracy by using only patterned soft X-ray, without irradiation with both patterned soft X-ray (patterned beam) and processing laser light, based on selection of a light source part that generates soft X-ray most suitable for processing applications and also on use of an ellipsoidal mirror that matches the wavelength of soft X-ray and thereby improves light-focusing efficiency.

According to the present invention, inorganic materials, organic materials and Si materials such as Si, $SiO_2$ and silicone can be processed, and processing of transparent materials and opaque materials is also possible.

**Brief Description of the Drawings**

[Fig. 1] Fig. 1 is a drawing explaining the structure of Example 1 pertaining to the present invention.
[Fig. 2] Fig. 2 is a drawing explaining Example 1 pertaining to the present invention.
[Fig. 3] Fig. 3 is a drawing explaining the structure of Example 2 pertaining to the present invention.
[Fig. 4] Fig. 4 is a drawing explaining Example 1 pertaining to the present invention.

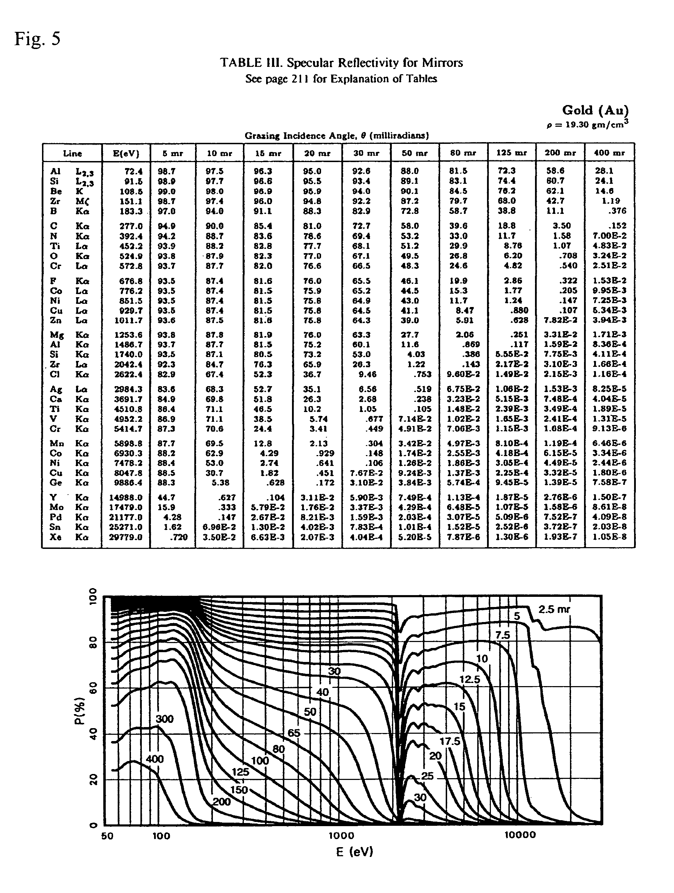

[Fig. 5] Fig. 5 is a reference material needed to explain Examples 1 and 2 pertaining to the present invention.
[Fig. 6] Fig. 6 is a drawing explaining the structure of Example 3 pertaining to the present invention.
[Fig. 7] Fig. 7 is a drawing explaining a conventional technology of the present invention.

**Description of the Symbols**

| 1 | Light source |
|---|---|
| 2, 18 | Patterned beam |
| 3, 17 | Optics system |
| 4, 19 | Work |
| 5 | Processing laser light |
| 6 | Processing laser |
| 7 | Light source part |
| 8 | Patterning and irradiating means |
| 9 | Sample part |
| 11 | Ultraviolet-light and/or soft X-ray generation laser |
| 12 | Light-focusing optics system |
| 13 | Ta target |
| 14 | Soft X-ray |
| 15 | Ellipsoidal mirror |
| 16 | Master pattern |
| 20 | Stage |
| 21 | Wolter mirror |

**Best Mode for Carrying Out the Invention**

Embodiments of the optical processing apparatus and optical processing method proposed by the present invention, which are designed to process works made of inorganic materials, etc., are explained by referring to drawings.

The present invention provides a processing apparatus and processing method designed to allow works made of inorganic materials, etc., to be processed at an accuracy of several nm. First, the basic principles of the present invention are explained. With conventional laser technologies, processing accuracy is limited roughly to the wavelength of laser light. Also, transparent inorganic materials cannot be processed by direct irradiation with laser light, because these materials have no color and thus do not absorb light easily.

The prior inventions by one of the inventors (refer to Patent Literatures 2 and 3) draw on the fact that induced optical absorption occurs only in the area onto which a patterned beam is irradiated. The specific idea is irradiation, and therefore absorption, of a processing laser light of a longer wavelength in the visible light to ultraviolet range, i.e., a laser beam that provides lower cost and better stability, to enable processing (shaving, cutting, etc.) and refinement of works in such a way that processing accuracy of up to around the wavelength of soft X-ray can be easily achieved.

In contrast, the present invention uses soft X-ray as a patterned beam, soft X-ray is focused and works are irradiated with it at high energy density, in order to enable processing (shaving, cutting, etc.) and refinement of works in such a way that processing accuracy of up to around the wavelength of soft X-ray can be achieved, without having to cause the work to separately absorb a processing laser light.

Based on the aforementioned principles, in the present invention, a work made of inorganic materials is irradiated with soft X-rays in a pattern designed to achieve a specified shape, while processing (shaving, cutting, etc.) and refining the surface of the work at the same time.

To achieve the aforementioned principles, the present invention uses an optics system matching the wavelength of soft X-ray to focus soft X-ray to high energy density, and then irradiates a work with this soft X-ray of high energy density using a movable scanning stage, master pattern or other patterned-beam irradiating means to process (shave, cut, etc.) or refine the work in a specified pattern.

## Example 1

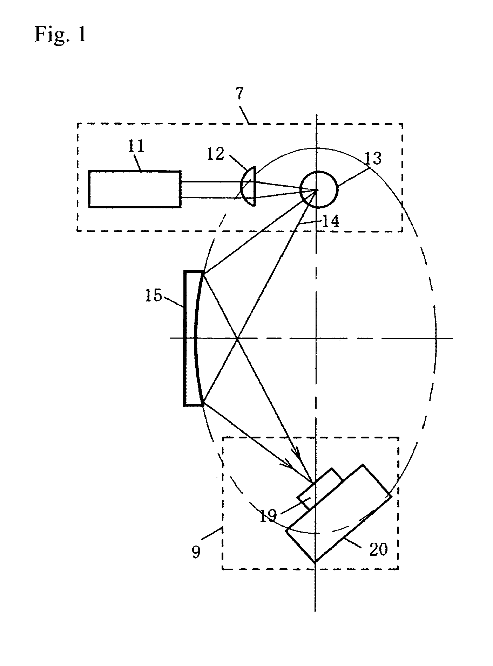

Fig. 1 is a drawing explaining the structure of Example 1 that illustrates the optical processing apparatus and optical processing method proposed by the present invention. The apparatus shown in Example 1 comprises a light source part 7, an optics system 15 providing a light-focusing irradiation means, and a sample part 9.

The light source part 7 that generates soft X-ray focuses a laser beam onto a target 13 via a light-focusing optics system 12, to generate soft X-ray 14.

As for the type of laser, excimer laser, Nd:YAG laser, or femtosecond laser such as titanium sapphire laser, can be used, among others. The target can be tin, tantalum, hafnium, xenon, etc. In this example, soft X-ray 14 is generated by focusing a pulse laser beam of 720 mJ/pulse, 532 mn from an Nd:YAG laser 11 onto a Ta (tantalum) target.

Soft X-ray 14 generated by the light source part 7 is focused via an ellipsoidal mirror 15, thereby irradiating a work 19 (inorganic material, etc.). This way, the work 19 can be irradiated with soft X-ray in a specified pattern to process (shave, cut, etc.) or refine the work 19.

In Example 1, the patterning and irradiating means for irradiating the work with soft X-ray in a specified shape can be achieved by a structure wherein a moving stage 20 on which the work 19 is installed is moved relative to soft X-ray. Other structures of patterning irradiation means are explained below.

(1) Use a scanning mirror to focus and irradiate soft X-ray onto the work to achieve scanning patterning.
(2) Provide a contact mask on the surface of the work and irradiate soft X-ray through a slit in the contact mask to achieve patterned irradiation.
(3) Transfer a specified pattern of soft X-ray using a master pattern and an imaging optics system.

Here, the structure characterizing the present invention is that soft X-ray 14 generated from the light source part 7 is laser-plasma soft X-ray of high energy density carrying many photons per unit time and unit volume. This soft X-ray is focused over a large solid angle using the ellipsoidal mirror 15 to increase its energy density, and then the work 19 is irradiated with the focused soft X-ray to achieve processing without having to irradiate an additional processing laser light onto the area previously irradiated with a patterned beam (soft X-ray) as required by conventional technologies.

Of particular importance is that the inventors designed the shape of the ellipsoidal mirror 15 in such a way as to increase the light-focusing efficiency of the ellipsoidal mirror, by considering the angle of incidence and reflectance on the ellipsoidal mirror surface within the wavelength range of soft X-ray 14 used. The structure (design) of this ellipsoidal mirror 15 is explained below.

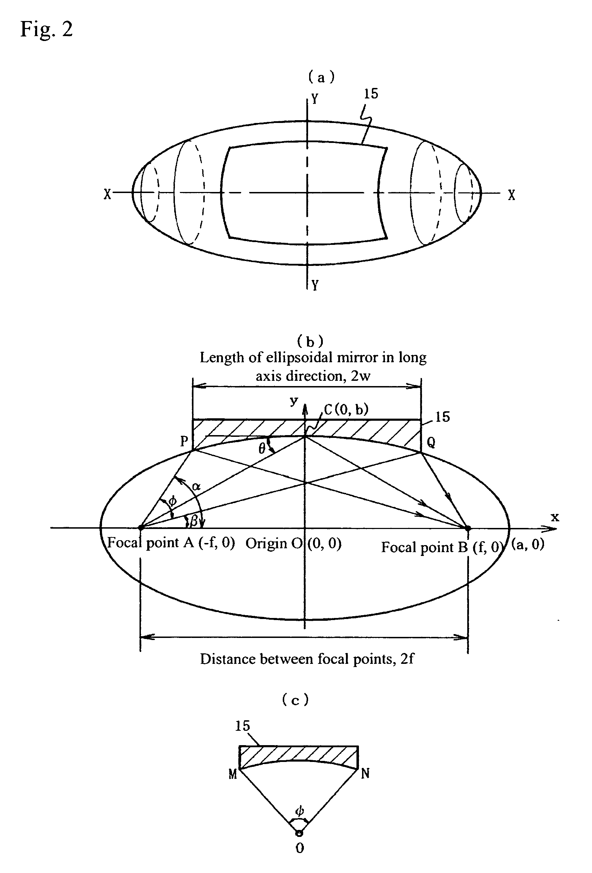

Fig. 2 is a drawing explaining the ellipsoidal mirror 15 pertaining to the present invention. As shown in Fig. 2 (a), the ellipsoidal mirror 15 is formed by rotating an ellipse or a part thereof around rotating axis X-X' passing two focal points. The interior surface of this rotated ellipsoid provides the reflection surface.

Fig. 2 (b) is a cross-section view of the ellipsoidal mirror 15 cut along a plane containing rotating axis X-X' of the ellipsoid. Here, A and B are focal points of the ellipsoidal mirror 15, and a generation source of soft X-ray 14 (i.e., target 13) is placed at focal point A, and light is focused onto a work 19 placed at focal point B.

The center of two focal points A and B is defined as the origin, with the x-axis extending in the same direction as rotating axis X-X', and the y-axis extending in the direction vertical to the rotating axis. In this coordinate system, the ellipse that forms the cross-section is expressed by $x^2/a^2+y^2/b^2 = 1$.

In Fig. 2 (b), 2w represents the length of the ellipsoidal mirror 15 in the rotating axis direction. The coordinates of focal points A and B are given by (-f, 0) and (f, 0), respectively. Here, the distance between focal points A and B is 2f. Of the two end points of the reflection surface of the ellipsoidal mirror 15 in the rotating axis direction, the end point closer to focal point A is given by P, while the end point farther from focal point A is given by Q. At this time, the angle formed by "straight line AP passing focal point A and end point P" and "straight line AQ passing focal point A and end point Q" is given by $\phi$.

The intersection (0, b) of the ellipse and y-axis is given by C, while the angle formed by the "tangential line of the ellipse at point C (0, b)" and the "straight line passing focal point A (-f, 0) and point C (0, b)" is given by $\theta$. This $\theta$ is the grazing angle of light emitted from focal point A as it is incident on the ellipsoidal mirror 15.

Fig. 2 (c) is a cross-section view of the ellipsoidal mirror 15 cut along a plane passing origin O and running vertically to the rotating axis. $\psi$ is the angle formed by the ellipsoidal mirror 15. If M and N represent the two end points of the ellipsoidal mirror, $\psi$ indicates the angle formed by straight line OM and straight line ON.

How much of soft X-ray 14 emitted from the generation source of soft X-ray 14 placed at focal point A can be focused onto the work at focal point B is determined by the "the solid angle of mirror determined by $\phi$ and $\psi$" and "reflectance R on the mirror surface." More light can be focused when $\psi$ is greater.

If $\psi$ is fixed to the maximum value at which processing is possible, light-focusing efficiency is determined by product $R\phi$ of reflectance R and angle $\phi$. In the paragraphs below, "focusing-efficiency" refers to this $R\phi$.

If the ratio of the length of the ellipsoidal mirror 15 in the long axis direction, or 2w, and the distance between focal points, or 2f, is constant, then increasing θ increases φ but decreases reflectance R. On the other hand, when θ is decreased, φ decreases while reflectance R increases. In the present invention, these relationships were used as a design guideline of the ellipsoidal mirror 15 to increase light-focusing efficiency obtained by R x φ.

In Fig. 2 (b), focal points A and B ($\pm$f, 0) of the ellipse can be expressed by Equation 2 below.

[Equation 2]

$$(\pm f, 0) = (\pm \sqrt{a^2 - b^2}, 0)$$

The coordinates of point P can be expressed by Equation 3 below, based on the relationships of a = f/cosθ and b = f tan θ.

[Equation 3]

$$\left(-w, b\sqrt{1 - \frac{w^2}{a^2}}\right)$$

$$= \left(-w, f\tan\theta\sqrt{1 - \left(\frac{w}{f}\right)^2\cos^2\theta}\right)$$

Accordingly, tanα can be expressed by Equation 4 below if the angle formed by "straight line AP passing focal point A and end point P" shown in Fig. 2 (b), and rotating axis X-X', is given by α.

[Equation 4]

$$\tan\alpha = \frac{\tan\theta\sqrt{1 - \left(\frac{w}{f}\right)^2\cos^2\theta}}{1 - \frac{w}{f}}$$

From Equation 4, it is evident that α is determined by "grazing angleθ" and "2w/2f = w/f, or the ratio of the distance between focal points, or 2f, and the length of the ellipsoidal mirror 15 in the long axis direction, or 2w."

Similarly, tanβ can be expressed by Equation 5 below if the angle formed by "straight line AQ passing focal point A and end point Q" shown in Fig. 2 (b), and rotating axis X-X', is given by β.

[Equation 5]

$$\tan\beta = \frac{\tan\theta\sqrt{1-\left(\frac{w}{f}\right)^2\cos^2\theta}}{1+\frac{w}{f}}$$

Now, angle $\phi$ can be expressed by Equation 6 below.
In Equation 6, $\tan^{-1}$ indicates the inverse function of tan.
[Equation 6]

$$\phi = \alpha - \beta$$
$$= \tan^{-1}\frac{\tan\theta\sqrt{1-\left(\frac{w}{f}\right)^2\cos^2\theta}}{1-\frac{w}{f}} - \tan^{-1}\frac{\tan\theta\sqrt{1-\left(\frac{w}{f}\right)^2\cos^2\theta}}{1+\frac{w}{f}}$$

Based on the above, $\alpha$, $\beta$ and $\phi$ can be determined uniquely once 2f, or the distance between focal points, or more specifically the distance between the generation source of soft X-ray (focal point A) and work 19 (focal point B), is set, along with 2w being the length of the ellipsoidal mirror 15 in the long axis direction, based on the overall size of the processing apparatus embodying the present invention, and then grazing angle $\theta$ is determined. This sets the elliptical shape of the ellipsoidal mirror 15, and the reflection surface of the ellipsoidal mirror 15 can be formed.

Grazing angle $\theta$ can be determined as follows. Reflectance R of soft X-ray 14 on the reflection surface of the ellipsoidal mirror 15 is dependent upon the material of reflection surface as well as the wavelength and grazing angle $\theta$ of soft X-ray 14. Known values are used to represent this relationship of dependence. On the other hand, $\phi$ is dependent upon grazing angle $\theta$, and $\theta$ can be calculated from Equation 6. Grazing angle $\theta$ is determined in such a way that R x $\phi$ produces the maximum value with respect to the wavelength of soft X-ray 14 obtained above.

In this example, soft X-ray with a wavelength of approx. 10 nm is used. Gold, which exhibits high reflectance R within this wavelength range, is used as the reflection surface. In actuality, the ellipsoidal mirror 15 is created using quartz glass, after which the quartz glass surface is coated with chrome, and then with gold.

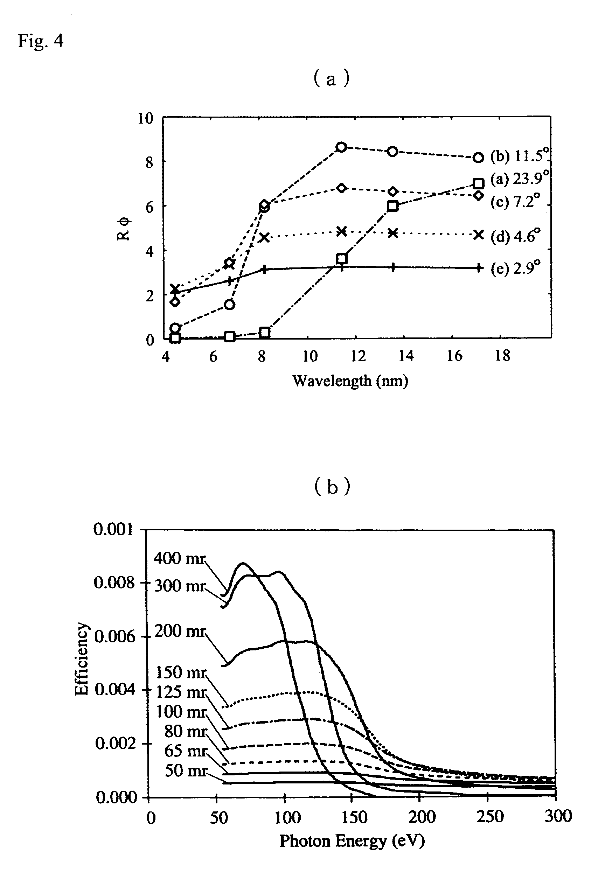

A specific example of how the inventors determined grazing angle $\theta$ is explained using Fig. 2 and the graphs provided in Fig. 4. In Fig. 2 (b), 2w representing the length of the ellipsoidal mirror 15 in the long axis direction is assumed as 80 mm, while 2f representing the distance between focal points A and B of the ellipsoidal mirror 15 is assumed as 150 mm.

To obtain reflectance R on the gold (Au) surface of the reflector with respect to the wavelength and grazing angle $\theta$ within the soft X-ray wavelength range of approx. 10 nm, the known values published in TABLE III, "Specular Reflectivity for Mirrors" on p. 315 of "Atomic Data and Nuclear Data Tables Vol. 54, No. 2, July (1993)" were used, along with the values illustrated in a graph created by plotting this table.

In this reference material, each "line" indicates the emission line of each substance in the X-ray range, while "E (eV)" represents photon energy (energy carried by one photon) of X-ray generated by each of the various X-ray light source materials. "$\theta$" is the angle of incidence of X-ray as it enters the gold surface (angle formed by the gold surface and the X-ray entering the surface) in milliradians (mr). "P (%)" indicates reflectance. "$\rho$= 19.30 gm/cm$^3$" indicates the density of gold constituting the reflector.

Based on the above, the graph in Fig. 4 (a) was obtained. As shown by this graph, soft X-ray 14 with a wavelength of approx. 10 nm can be focused efficiently when $\theta$ is in a range of 4.6° to 23.9°. Particularly in the example shown in Fig. 4 (a), light-focusing efficiency R$\phi$ becomes the maximum when $\theta$ is 11.5°. To focus soft X-ray 14 of a longer wavelength, $\theta$ should be increased to raise light-focusing efficiency. When focusing soft X-ray 14 of a shorter wavelength, particularly a wavelength of 8 nm or below, light-focusing efficiency $R\phi$ can be increased by keeping $\theta$ to 7.2° or below.

As mentioned earlier, how much of soft X-ray 14 emitted from the generation source of soft X-ray 14 placed at focal point A can be focused onto the work at focal point B is determined by "the solid angle of mirror $\omega$ determined by $\phi$ and $\psi$" and "reflectance R on the mirror surface." If $\psi$ is fixed to the maximum value at which processing is possible, light-focusing efficiency is roughly determined by product $R\phi$ of reflectance R and angle $\phi$. Fig. 4 (a) is a graph obtained by assuming this $R\phi$ as representing "light-focusing efficiency." More accurately, a graph showing light-focusing efficiency obtained by calculating "the solid angle of mirror $\omega$ determined by $\phi$ and $\psi$" and "reflectance R on the mirror surface" is shown in Fig. 4(b).

In other words, this graph in Fig. 4 (b) shows light-focusing efficiency with respect to photon energy (energy carried by one photon of entering light), calculated as $R \times \omega/4\pi$, when angle of incidence $\theta$ is changed from 50 mr to 400 mr.

According to the graph shown in Fig. 4 (b), soft X-ray 14 having a photon energy of 100 eV can be efficiently focused when $\theta$ is 300 mr, while soft X-ray 14 having a photon energy of 150 eV can be efficiently focused when $\theta$ is 200 mr. The same trend is evident in both Fig. 4 (a) and Fig. 4 (b), meaning that $\theta$ must be increased in order to efficiently focus soft X-ray having greater photon energy. Angle of incidence $\theta$ can be obtained in a simplified manner using Fig. 4 (a), while a precise, optimal value of angle of incidence $\theta$ can be obtained using Fig. 4 (b).

Soft X-ray 14 is focused to high energy density onto the sample part 9 via the ellipsoidal mirror 15. This soft X-ray 14 is then incident onto the work 19 placed on the moving stage 20 (setting base). As the stage 20 moves in a specified manner with respect to soft X-ray 14, the work 19 is processed and/or refined in a specified pattern.

As for patterning, a contact mask may be used instead of the moving stage 20, as mentioned earlier. In other words, it is possible to shave, cut or otherwise process or refine the work 19 by focusing soft X-ray 14 to high energy density using the light-focusing optics system, patterning it to a specified pattern using a contact mask, and then irradiating the work 19 with the patterned beam.

When a contact mask is used, patterning mask material can be directly formed as film on the processing surface of the work 19 to be irradiated with soft X-ray. Contact mask film can be formed by means of deposition or sputtering, for example. As for the contact mask material, WSi (tungsten silicide), Au or Cr can be used, among others. Patterning can be achieved in the form of optical lithography, electron beam lithography or laser processing.

## Example 2

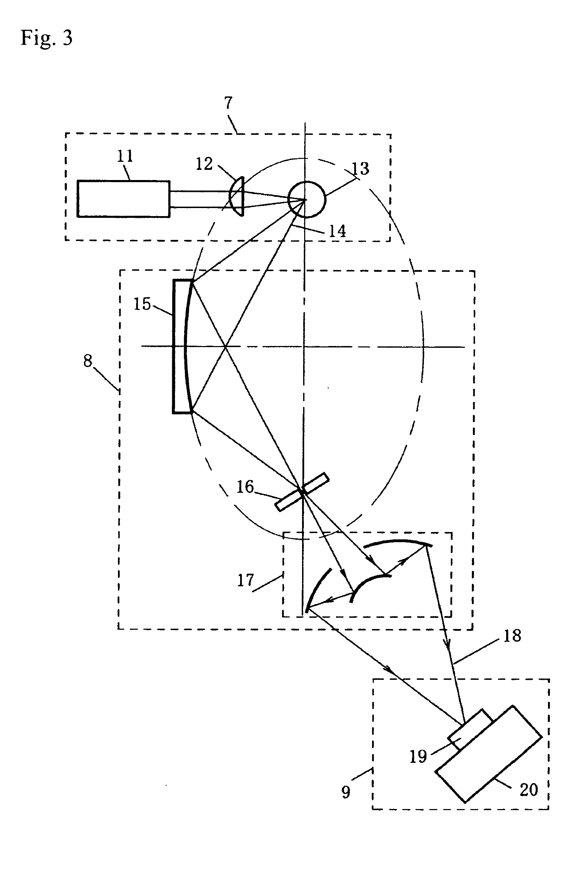

Fig. 3 is a drawing explaining Example 2 that illustrates the optical processing apparatus and optical processing method proposed by the present invention. Under the processing apparatus and processing method shown in Example 2, laser-plasma soft X-ray 14 is focused using an ellipsoidal mirror 15 to increase its energy density, and then is incident to the surface of a work 19 placed on a stage 20 to process or refine the work, just like in Example 1.

Example 2 shows a patterning example in which a master pattern 16 is transferred using an imaging optics system 17. To be specific, soft X-ray 14 focused by the ellipsoidal mirror 15 is transmitted through the master pattern 16, and then is incident to the work 19 via the imaging optics system 17 as patterned beam 18.

## Example 3

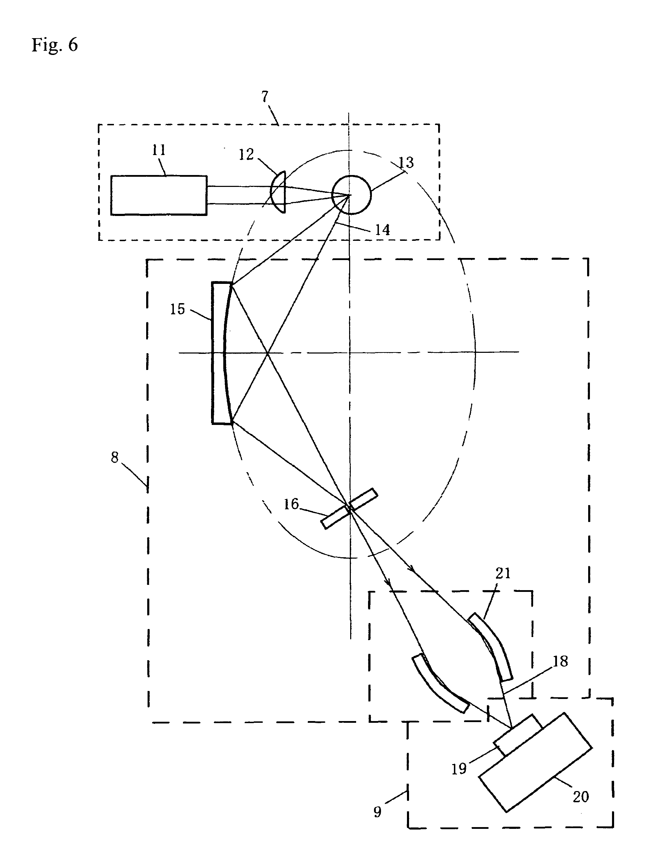

Fig. 6 is a drawing explaining Example 3 that illustrates the optical processing apparatus and optical processing method proposed by the present invention. Example 3 illustrates the same structure as in Example 2, except that a Wolter mirror 21 is used instead of the optics system 17. The remainder of the structure is the same as in Example 2. In other words, soft X-ray 14 focused by an ellipsoidal mirror 15 is transmitted through a master pattern 16, and then is incident to a work 19 via the Wolter mirror 21 as patterned beam 18.

In Example 3, the Wolter mirror 21 is used as an optics system to produce an image of ultraviolet light and/or soft X-ray, soft X ray 14, transmitted through the master pattern 16 at high energy density in accordance with the wavelength of ultraviolet light and/or soft X-ray.

The Wolter mirror 21 comprises a combination of rotary hyperboloidal mirror and rotary ellipsoidal mirror. Soft X-ray 14 is reflected twice on the reflection surface of the Wolter mirror 21 and then is incident to the work 19 as a patterned beam. This way, the work 19 can be irradiated with soft X-ray in a specified pattern to allow for processing (shaving, cutting, etc.) or refinement of the work 19.

The above paragraphs explained embodiments of the optical processing apparatus and optical processing method proposed by the present invention using specific examples. It should be noted, however, that the present invention is not at all limited by these examples, and various other examples can be considered within the scope of technical specifications stated in "Scope of Claims." For example, Examples 1 and 2 explained above used an ellipsoidal mirror as an optics system to focus soft X-ray to high energy density in accordance with the wavelength of soft X-ray, while Example 3 used both an ellipsoidal mirror and a Wolter mirror for the same purpose. Instead of ellipsoidal mirror or Wolter mirror, rotary paraboloidal mirror, toroidal mirror, rotary ellipsoidal mirror or rotary hyperbolic mirror, or any combination of the foregoing, can be used.

**Potential Industrial Field of Application**

Having the aforementioned structure, the present invention can be applied for optical functional parts such as photonic crystals and optical waveguides, or in microchip chemistry applications such as DNA analysis and blood test.

**Claims**

1. An optical processing apparatus comprising a light source part and a light-focusing irradiation means, the optical processing apparatus **characterized in that**:

   the light source part generates ultraviolet light and/or soft X-ray that allows a work to effectively absorb light, by irradiation of a target with laser light focused using a light-focusing optics system; and
   the light-focusing irradiation means comprises an optics system to focus the ultraviolet light and/or soft X-ray to high energy density in accordance with the wavelength of ultraviolet light and/or soft X-ray, irradiates the work with said focused ultraviolet light and/or soft X-ray of high energy density in a specified pattern, and processes and/or refines the work.

2. An optical processing apparatus comprising a light source part and a patterning and irradiating means, the optical processing apparatus **characterized in that**:

   the light source part generates ultraviolet light and/or soft X-ray that allows a work to effectively absorb light, by irradiation of a target with laser light focused using a light-focusing optics system; and
   the patterning and irradiating means comprises an optics system to focus the ultraviolet light and/or soft X-ray to high energy density in accordance with the wavelength of ultraviolet light and/or soft X-ray, irradiates the work with said focused ultraviolet light and/or soft X-ray of high energy density as a specified patterned beam adjusted to a desired shape, and processes and/or refines the work.

3. The optical processing apparatus according to Claim 1 or 2, **characterized in that** the optics system to focus the ultraviolet light and/or soft X-ray to high energy density in accordance with the wavelength of ultraviolet light and/or soft X-ray is an ellipsoidal mirror, and that, in the light source part, the generation source of ultraviolet light and/or soft X-ray is positioned at one of the two focal points of the ellipsoidal mirror, and the product of the reflectance on the ellipsoidal mirror surface with respect to the wavelength of ultraviolet light and/or soft X-ray reflected by the ellipsoidal mirror and focused on the other focal point, and the solid angle of the ellipsoidal mirror at the light source part, is set sufficiently large.

4. The optical processing apparatus according to Claim 1 or 2, **characterized in that** the optics system to focus the ultraviolet light and/or soft X-ray at high energy density in accordance with the wavelength of ultraviolet light and/or soft X-ray is an ellipsoidal mirror, and that, in the light source part, the generation source of ultraviolet light and/or soft X-ray is positioned at one of the two focal points of the ellipsoidal mirror, and the product of reflectance R on the ellipsoidal mirror surface with respect to the wavelength of ultraviolet light and/or soft X-ray reflected by the ellipsoidal mirror and focused on the other focal point, and angle $\phi$ specified by Equation 7 below at the light source part viewing therefrom both ends of the ellipsoidal mirror in the long axis direction, is set sufficiently large; where the symbols used in Equation 7 are defined as follows:

   $\theta$: Grazing angle of light emitted from the one of the focal points as it enters the ellipsoidal mirror;
   w/f: Ratio of the distance between focal points, or 2f, and the length of the ellipsoidal mirror in the rotating axis direction, or 2w;
   $\alpha$: Angle formed by the "rotating axis of the ellipsoidal mirror" and the "straight line passing the one of the focal points of the ellipsoidal mirror and the end point of the ellipsoidal mirror in the rotating axis direction located closer to said focal point";
   $\beta$: Angle formed by the "rotating axis of the ellipsoidal mirror" and the "straight line passing the one of the focal points of the ellipsoidal mirror and the end point of the ellipsoidal mirror in the rotating axis direction located farther from said focal point";

[Equation 7]

$$\phi = \alpha - \beta$$

$$= \tan^{-1} \frac{\tan\theta\sqrt{1 - \left(\frac{w}{f}\right)^2 \cos^2\theta}}{1 - \frac{w}{f}} - \tan^{-1} \frac{\tan\theta\sqrt{1 - \left(\frac{w}{f}\right)^2 \cos^2\theta}}{1 + \frac{w}{f}}$$

5. The optical processing apparatus according to Claim 1 or 2, **characterized in that** the optics system to focus the ultraviolet light and/or soft X-ray at high energy density in accordance with the wavelength of ultraviolet light and/or soft X-ray is constituted by one mirror or a combination of two or more mirrors selected from a group comprising rotary paraboloidal mirror, toroidal mirror, rotary ellipsoidal mirror and rotary hyperbolic mirror.

6. The optical processing apparatus according to Claim 1 or 2, **characterized in that** the optics system to focus the ultraviolet light and/or soft X-ray at high energy density in accordance with the wavelength of ultraviolet light and/or soft X-ray is constituted as a Wolter mirror comprising a combination of rotary hyperboloidal mirror and rotary ellipsoidal mirror.

7. An optical processing method **characterized by** comprising:

focusing and irradiating a laser beam at a light source part onto a target through a light-focusing optics system, and generating ultraviolet light and/or soft X-ray that allows a work to effectively absorb light; and
focusing the ultraviolet light and/or soft X-ray to high energy density in accordance with the wavelength of said ultraviolet light and/or soft X-ray using an ellipsoidal mirror, irradiating the work with the focused ultraviolet light and/or soft X-ray at high energy density in a specified pattern, and processing and/or refining the work.

Fig. 1

## Fig. 2

( a )

( b )
Length of ellipsoidal mirror in long
axis direction, 2w

Distance between focal points, 2f

( c )

Fig. 3

Fig. 4

( a )

( b )

# Fig. 5

TABLE III. Specular Reflectivity for Mirrors
See page 211 for Explanation of Tables

**Gold (Au)**
$\rho = 19.30 \text{ gm/cm}^3$

Grazing Incidence Angle, $\theta$ (milliradians)

| Line | | E(eV) | 5 mr | 10 mr | 15 mr | 20 mr | 30 mr | 50 mr | 80 mr | 125 mr | 200 mr | 400 mr |
|---|---|---|---|---|---|---|---|---|---|---|---|---|
| Al | $L_{2,3}$ | 72.4 | 98.7 | 97.5 | 96.3 | 95.0 | 92.6 | 88.0 | 81.5 | 72.3 | 58.6 | 28.1 |
| Si | $L_{2,3}$ | 91.5 | 98.9 | 97.7 | 96.6 | 95.5 | 93.4 | 89.1 | 83.1 | 74.4 | 60.7 | 24.1 |
| Be | K | 108.5 | 99.0 | 98.0 | 96.9 | 95.9 | 94.0 | 90.1 | 84.5 | 76.2 | 62.1 | 14.6 |
| Zr | M$\zeta$ | 151.1 | 98.7 | 97.4 | 96.0 | 94.8 | 92.2 | 87.2 | 79.7 | 68.0 | 42.7 | 1.19 |
| B | K$\alpha$ | 183.3 | 97.0 | 94.0 | 91.1 | 88.3 | 82.9 | 72.8 | 58.7 | 38.8 | 11.1 | .376 |
| C | K$\alpha$ | 277.0 | 94.9 | 90.0 | 85.4 | 81.0 | 72.7 | 58.0 | 39.6 | 18.8 | 3.50 | .152 |
| N | K$\alpha$ | 392.4 | 94.2 | 88.7 | 83.6 | 78.6 | 69.4 | 53.2 | 33.0 | 11.7 | 1.58 | 7.00E-2 |
| Ti | L$\alpha$ | 452.2 | 93.9 | 88.2 | 82.8 | 77.7 | 68.1 | 51.2 | 29.9 | 8.76 | 1.07 | 4.83E-2 |
| O | K$\alpha$ | 524.9 | 93.8 | 87.9 | 82.3 | 77.0 | 67.1 | 49.5 | 26.8 | 6.20 | .708 | 3.24E-2 |
| Cr | L$\alpha$ | 572.8 | 93.7 | 87.7 | 82.0 | 76.6 | 66.5 | 48.3 | 24.6 | 4.82 | .540 | 2.51E-2 |
| F | K$\alpha$ | 676.8 | 93.5 | 87.4 | 81.6 | 76.0 | 65.5 | 46.1 | 19.9 | 2.86 | .322 | 1.53E-2 |
| Co | L$\alpha$ | 776.2 | 93.5 | 87.4 | 81.5 | 75.9 | 65.2 | 44.5 | 15.3 | 1.77 | .205 | 9.95E-3 |
| Ni | L$\alpha$ | 851.5 | 93.5 | 87.4 | 81.5 | 75.8 | 64.9 | 43.0 | 11.7 | 1.24 | .147 | 7.25E-3 |
| Cu | L$\alpha$ | 929.7 | 93.5 | 87.4 | 81.5 | 75.8 | 64.5 | 41.1 | 8.47 | .880 | .107 | 5.34E-3 |
| Zn | L$\alpha$ | 1011.7 | 93.6 | 87.5 | 81.6 | 75.8 | 64.3 | 39.0 | 5.91 | .628 | 7.82E-2 | 3.94E-3 |
| Mg | K$\alpha$ | 1253.6 | 93.8 | 87.8 | 81.9 | 76.0 | 63.3 | 27.7 | 2.06 | .251 | 3.31E-2 | 1.71E-3 |
| Al | K$\alpha$ | 1486.7 | 93.7 | 87.7 | 81.5 | 75.2 | 60.1 | 11.6 | .869 | .117 | 1.59E-2 | 8.36E-4 |
| Si | K$\alpha$ | 1740.0 | 93.5 | 87.1 | 80.5 | 73.2 | 53.0 | 4.03 | .386 | 5.55E-2 | 7.75E-3 | 4.11E-4 |
| Zr | L$\alpha$ | 2042.4 | 92.3 | 84.7 | 76.3 | 65.9 | 26.3 | 1.22 | .143 | 2.17E-2 | 3.10E-3 | 1.66E-4 |
| Cl | K$\alpha$ | 2622.4 | 82.9 | 67.4 | 52.3 | 36.7 | 9.46 | .753 | 9.60E-2 | 1.49E-2 | 2.15E-3 | 1.16E-4 |
| Ag | L$\alpha$ | 2984.3 | 83.6 | 68.3 | 52.7 | 35.1 | 6.56 | .519 | 6.75E-2 | 1.06E-2 | 1.53E-3 | 8.25E-5 |
| Ca | K$\alpha$ | 3691.7 | 84.9 | 69.8 | 51.8 | 26.3 | 2.68 | .238 | 3.23E-2 | 5.15E-3 | 7.48E-4 | 4.04E-5 |
| Ti | K$\alpha$ | 4510.8 | 86.4 | 71.1 | 46.5 | 10.2 | 1.05 | .105 | 1.48E-2 | 2.39E-3 | 3.49E-4 | 1.89E-5 |
| V | K$\alpha$ | 4952.2 | 86.9 | 71.1 | 38.5 | 5.74 | .677 | 7.14E-2 | 1.02E-2 | 1.65E-3 | 2.41E-4 | 1.31E-5 |
| Cr | K$\alpha$ | 5414.7 | 87.3 | 70.6 | 24.4 | 3.41 | .449 | 4.91E-2 | 7.06E-3 | 1.15E-3 | 1.68E-4 | 9.13E-6 |
| Mn | K$\alpha$ | 5898.8 | 87.7 | 69.5 | 12.8 | 2.13 | .304 | 3.42E-2 | 4.97E-3 | 8.10E-4 | 1.19E-4 | 6.46E-6 |
| Co | K$\alpha$ | 6930.3 | 88.2 | 62.9 | 4.29 | .929 | .148 | 1.74E-2 | 2.55E-3 | 4.18E-4 | 6.15E-5 | 3.34E-6 |
| Ni | K$\alpha$ | 7478.2 | 88.4 | 53.0 | 2.74 | .641 | .106 | 1.26E-2 | 1.86E-3 | 3.05E-4 | 4.49E-5 | 2.44E-6 |
| Cu | K$\alpha$ | 8047.8 | 88.5 | 30.7 | 1.82 | .451 | 7.67E-2 | 9.24E-3 | 1.37E-3 | 2.25E-4 | 3.32E-5 | 1.80E-6 |
| Ge | K$\alpha$ | 9886.4 | 88.3 | 5.38 | .628 | .172 | 3.10E-2 | 3.84E-3 | 5.74E-4 | 9.45E-5 | 1.39E-5 | 7.58E-7 |
| Y | K$\alpha$ | 14988.0 | 44.7 | .627 | .104 | 3.11E-2 | 5.90E-3 | 7.49E-4 | 1.13E-4 | 1.87E-5 | 2.76E-6 | 1.50E-7 |
| Mo | K$\alpha$ | 17479.0 | 15.9 | .333 | 5.79E-2 | 1.76E-2 | 3.37E-3 | 4.29E-4 | 6.48E-5 | 1.07E-5 | 1.58E-6 | 8.61E-8 |
| Pd | K$\alpha$ | 21177.0 | 4.28 | .147 | 2.67E-2 | 8.21E-3 | 1.59E-3 | 2.03E-4 | 3.07E-5 | 5.09E-6 | 7.52E-7 | 4.09E-8 |
| Sn | K$\alpha$ | 25271.0 | 1.62 | 6.96E-2 | 1.30E-2 | 4.02E-3 | 7.83E-4 | 1.01E-4 | 1.52E-5 | 2.52E-6 | 3.72E-7 | 2.03E-8 |
| Xe | K$\alpha$ | 29779.0 | .720 | 3.50E-2 | 6.63E-3 | 2.07E-3 | 4.04E-4 | 5.20E-5 | 7.87E-6 | 1.30E-6 | 1.93E-7 | 1.05E-8 |

Fig. 6

Fig. 7
(Conventional example)

## INTERNATIONAL SEARCH REPORT

| | International application No. |
|---|---|
| | PCT/JP2005/001886 |

**A.  CLASSIFICATION OF SUBJECT MATTER**
Int.Cl$^7$  G21K1/06, 5/02, B23K26/00, H05G2/00

According to International Patent Classification (IPC) or to both national classification and IPC

**B.  FIELDS SEARCHED**

Minimum documentation searched (classification system followed by classification symbols)
Int.Cl$^7$  G21K1/06, 5/02, B23K26/00, H05G2/00

Documentation searched other than minimum documentation to the extent that such documents are included in the fields searched
Jitsuyo Shinan Koho        1922-1996    Jitsuyo Shinan Toroku Koho    1996-2005
Kokai Jitsuyo Shinan Koho    1971-2005    Toroku Jitsuyo Shinan Koho    1994-2005

Electronic data base consulted during the international search (name of data base and, where practicable, search terms used)

**C.  DOCUMENTS CONSIDERED TO BE RELEVANT**

| Category* | Citation of document, with indication, where appropriate, of the relevant passages | Relevant to claim No. |
|---|---|---|
| Y<br>A | JP 2001-68296 A  (Kabushiki Kaisha Riezon Kenkyusho),<br>16 March, 2001 (16.03.01),<br>Column 4, lines 20 to 29; column 6, lines 4 to 12; column 9, lines 14 to 18; Figs. 1, 7<br>(Family: none) | 1-3,5-7<br>4 |
| Y<br>A | JP 2003-14895 A  (Rigaku Denki Co., Ltd.),<br>15 January, 2003 (15.01.03),<br>Column 4, lines 3 to 32; column 6, line 14 to column 7, line 1; Figs. 3 to 5, 15<br>& EP 1273906 A2 | 1-3,5-7<br>4 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>10 May, 2005 (10.05.05) | Date of mailing of the international search report<br>24 May, 2005 (24.05.05) |
|---|---|
| Name and mailing address of the ISA/<br>Japanese Patent Office | Authorized officer |
| Facsimile No. | Telephone No. |

Form PCT/ISA/210 (second sheet) (January 2004)

**INTERNATIONAL SEARCH REPORT**

| International application No. |
| --- |
| PCT/JP2005/001886 |

C (Continuation). DOCUMENTS CONSIDERED TO BE RELEVANT

| Category* | Citation of document, with indication, where appropriate, of the relevant passages | Relevant to claim No. |
| --- | --- | --- |
| Y<br>A | JP 8-271697 A (Canon Inc.),<br>18 October, 1996 (18.10.96),<br>Claims; column 1, lines 14 to 30, 42 to 47;<br>column 2, lines 11 to 37; Figs. 1 to 2<br>(Family: none) | 5-6<br>1-4,7 |
| A | US 4525853 A (ENERGY CONVERSION DEVICES, INC.),<br>25 June, 1985 (25.06.85),<br>Column 6, line 21 to column 7, line 18;<br>Figs. 3A to 5<br>& JP 60-98399 A | 1-7 |
| A | JP 8-5796 A (Hitachi, Ltd.),<br>12 January, 1996 (12.01.96),<br>Column 3, lines 6 to 40; Fig. 10<br>(Family: none) | 1-7 |
| A | JP 11-26199 A (Mitsubishi Electric Corp.),<br>29 January, 1999 (29.01.99),<br>Claims 4 to 5; column 3, line 46 to column 4,<br>line 16; Fig. 1<br>(Family: none) | 1-7 |
| A | JP 11-64595 A (Rigaku Industrial Co.),<br>05 March, 1999 (05.03.99),<br>Claims; Detailed Explanation of the Invention;<br>Par. Nos. [0019] to [0024]; Fig. 1<br>(Family: none) | 1-7 |

Form PCT/ISA/210 (continuation of second sheet) (January 2004)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002252258 A
- JP 2003167354 A
- US 6818908 B

**Non-patent literature cited in the description**

- Specular Reflectivity for Mirrors. *Atomic Data and Nuclear Data Tables,* July 1993, vol. 54 (2), 315